# EUROPEAN PATENT APPLICATION

(11) **EP 4 152 174 A1**
(43) Date of publication of application: **22.03.2023**
(21) Application number: 21936262.1
(22) Date of filing: 08.12.2021
(51) Int. Cl.: G06F 16/2453, G06F 16/2455

(54) **DATA PROCESSING METHOD AND APPARATUS, AND COMPUTING DEVICE AND MEDIUM**

(30) Priority: 23.06.2021 CN 202110700394
(71) Applicant: BEIJING BAIDU NETCOM SCIENCE TECHNOLOGY CO., LTD., Beijing 100085 (CN)
(72) Inventor: TIAN, Yongsheng, Beijing 100085 (CN); WANG, Ting, Beijing 100085 (CN); SHI, Ran, Beijing 100085 (CN); ZHU, Liangchang, Beijing 100085 (CN)
(74) Representative: Laqua, Bernd Christian Kurt
(86) International application number: PCT/CN2021/136561
(87) International publication number: WO 2022/267368

(57) **Abstract**

The present disclosure provides a data processing method and apparatus, a computing device, and a medium, and relates to the field of big data, and in particular to the field of data splicing. An implementation is: obtaining a first data stream; querying a query table to find in the query table storage information of a second data stream corresponding to the first data stream in a database, wherein a plurality of second data streams are stored in the database, one or more valid second data streams are included in the plurality of second data streams, and storage information of each of the one or more valid second data streams in the database is included in the query table; and in response to having found in the query table the storage information of the second data stream corresponding to the first data stream in the database, determining, in the database, the second data stream to be spliced with the first data stream based on the storage information.

## Description

### CROSS-REFERENCE TO RELATED APPLICATIONS

The present application claims priority to Chinese patent application 202110700394.1 filed on June 23, 2021, the entire contents of which are incorporated herein by reference in their entirety.

### TECHNICAL FIELD

The present disclosure relates to the field of big data, particularly to the field of data splicing, and specifically to a data processing method and apparatus, a computing device, a computer-readable storage medium, and a computer program product.

### BACKGROUND

Data processing platforms (e.g., data processing frameworks) play an important role in big data, machine learning, and other data-driven fields. For illustrative purposes only, example open-source data processing frameworks used in such fields are Spark Streaming, Storm, and Apache Flink, etc. From the perspective of data processing logic, data processing may be divided into two categories, i.e., single data stream processing (e.g., filtering and transformation, etc.) and multiple data stream processing (e.g., aggregation and splicing, etc.).

The approaches described in this section are not necessarily those that have been previously conceived or employed. It should not be assumed that any of the approaches described in this section qualify as related art merely by virtue of their inclusion in this section, unless otherwise indicated. Similarly, it should not be assumed that the problems mentioned in this section are recognized in any related art, unless otherwise indicated.

### SUMMARY

The present disclosure provides a method and apparatus for data processing method, an electronic device, a computer-readable storage medium, and a computer program product.

According to an aspect of the present disclosure, there is provided a data processing method, including: obtaining a first data stream; querying a query table to find in the query table storage information of a second data stream corresponding to the first data stream in a database, wherein a plurality of second data streams are stored in the database, one or more valid second data streams are included in the plurality of second data streams, and storage information of each of the one or more valid second data streams in the database is included in the query table; and in response to having found in the query table the storage information of the second data stream corresponding to the first data stream in the database, determining, in the database, the second data stream to be spliced with the first data stream based on the storage information.

According to an aspect of the present disclosure, there is provided a data processing apparatus, including: an obtaining unit configured to obtain a first data stream; a query unit configured to query a query table to find in the query table storage information of a second data stream corresponding to the first data stream in a database, wherein a plurality of second data streams are stored in the database, one or more valid second data streams are included in the plurality of second data streams, and storage information of each of the one or more valid second data streams in the database is included in the query table; and a first determination unit configured to: in response to having found in the query table the storage information of the second data stream corresponding to the first data stream in the database, determine, in the database, the second data stream to be spliced with the first data stream based on the storage information.

According to an aspect of the present disclosure, there is provided a computing device, including: at least one processor; and a memory communicatively connected to the at least one processor, where the memory stores instructions executable by the at least one processor, and when executed by the at least one processor, the instructions cause the at least one processor to perform the foregoing method.

According to an aspect of the present disclosure, there is provided a non-transitory computer-readable storage medium storing computer instructions, where the computer instructions are used to cause a computer to perform the foregoing method.

According to an aspect of the present disclosure, there is provided a computer program product, including a computer program, where when the computer program is executed by a processor, the foregoing method is implemented.

According to one or more embodiments of the present disclosure, ineffective data searching may be avoided, and the efficiency of data processing may be improved.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTIONS OF THE DRAWINGS

The accompanied drawings illustrate embodiments by way of example and constitute a part of the specification, and explain exemplary implementations of the embodiments together with the written description of the specification. The embodiments shown are merely for illustrative purposes and do not limit the scope of the claims. Throughout the drawings, identical reference numerals denote similar but not necessarily identical elements.
FIG. 1 is a schematic diagram of an exemplary system in which various methods described herein may be implemented according to some embodiments of the present disclosure;
FIG. 2 is a flowchart of a method for data processing according to some embodiments of the present disclosure;
FIG. 3 is a schematic diagram of a method for data processing according to some embodiments of the present disclosure;
FIG. 4 is a structural block diagram of an apparatus for data processing according to some embodiments of the present disclosure; and
FIG. 5 is a structural block diagram of an exemplary electronic device that may be used to implement embodiments of the present disclosure.

### DETAILED DESCRIPTION OF EMBODIMENTS

Embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications may be made to the embodiments described herein, without departing from the scope of the present disclosure. Likewise, for clarity and conciseness, description of well-known functions and structures are omitted in the following descriptions.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise indicated in the context. Moreover, the term "and/or" used in the present disclosure encompasses any of and all possible combinations of listed items.

Data splicing is a technology in which two or more different data streams from different data sources are combined into one piece of data based on a service association for downstream processing. As a non-limiting example, a first data stream from a first data source may be a click event of a user, and a second data stream from a second data source may be presentation data of a page. Then, splicing of the first data stream with the corresponding second data stream and subsequently providing the spliced data for downstream processing enable a downstream analysis of the user's click-through to the page based on the obtained spliced data.

In related art, in order to acquire a second data stream corresponding to a first data stream to realize the splicing of the first data stream with the second data stream, the corresponding second data stream is often searched directly in a database. However, due to the huge amount of data stored in the database, the searching process takes a long time, which exerts adverse impact on the splicing efficiency.

To this end, the present disclosure provides a method for data processing in which a query table independent of a database is built and storage information of a valid second data stream is stored in the query table. Consequently, the database is searched only when storage information of a required second data stream has been found in the query table, such that ineffective searching can be avoided and the efficiency of data processing can be improved and ensured.

Embodiments of the present disclosure will be described below in detail in conjunction with the accompanied drawings.

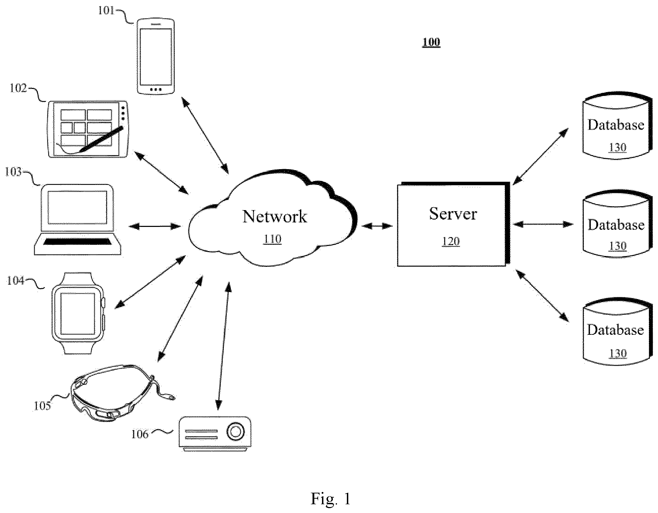

FIG. 1 is a schematic diagram of an exemplary system 100 in which various methods and apparatuses described herein may be implemented according to some embodiments of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more application programs.

In an embodiment of the present disclosure, the server 120 can run one or more services or software applications that enable a method for data processing to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. It should be understood that various system configurations are possible, which may be different from the system 100. Therefore, FIG. 1 is an example of the system for implementing various methods described herein, and is not intended to be limiting.

The user may use the client device 101, 102, 103, 104, 105, and/or 106 to obtain a first data stream and/or acquire a second data stream. The client device may provide an interface that enables the user of the client device to interact with the client device. The client device may also output information to the user via the interface. Although FIG. 1 depicts only six types of client devices, those skilled in the art will understand that any number of client devices are possible according to embodiments of the present disclosure.

The client device 101, 102, 103, 104, 105, and/or 106 may include various types of computer devices, such as a portable handheld-device, a general-purpose computer (such as a personal computer and a laptop computer), a workstation computer, a wearable device, a gaming system, a thin-client, various messaging devices, and a sensor or other sensing devices, etc. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld-device may include a cellular phone, a smartphone, a tablet computer, a personal digital assistant (PDA), etc. The wearable device may include a head-mounted display and other devices. The gaming system may include various handheld gaming devices, Internet-enabled gaming devices, etc. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data communication. As a non-limiting example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a midrange server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from users of the client devices 101, 102, 103, 104, 105, and 106. The server 120 may further include one or more application programs to display the data feeds and/or real-time events via one or more display devices of the client devices 101, 102, 103, 104, 105, and 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as an audio file and a video file. The data repository 130 may reside in various locations. For example, a data repository used by the server 120 may be locally in the server 120, or may be remote from the server 120 and may communicate with the server 120 via a network-based or dedicated connection. The data repository 130 may be of different types. In some embodiments, the data repository used by the server 120 may be a database, such as a relational database. One or more of these databases can store, update, and retrieve data from or to the database, in response to a command.

In some embodiments, one or more of the databases 130 may also be used by an application program to store application program data. The database used by the application program may be of different types, for example, may be a key-value repository, an object repository, or a regular repository backed by a file system.

The system 100 of FIG. 1 may be configured and operated in various manners, such that the various methods and apparatuses described according to the present disclosure can be applied.

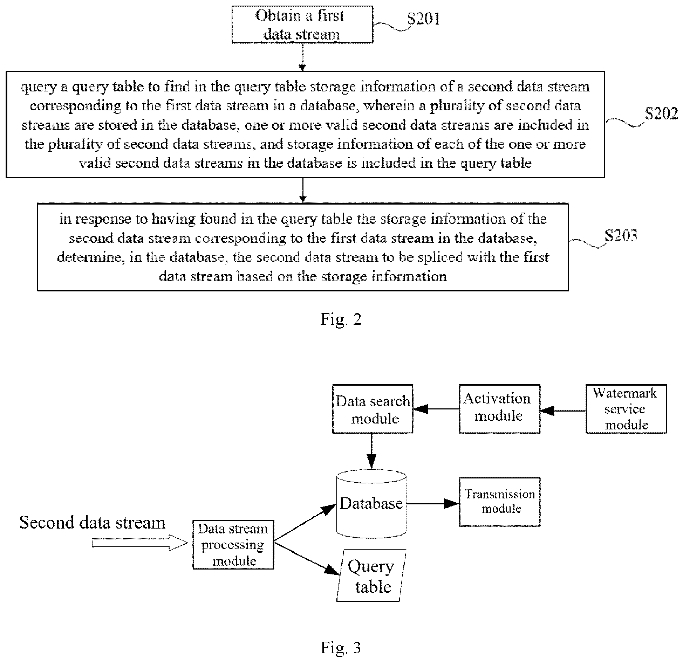

FIG. 2 is a flowchart of a method for data processing according to exemplary embodiments of the present disclosure. As shown in FIG. 2, the method comprises:
Step S201: obtaining a first data stream;
Step S202: querying a query table to find in the query table storage information of a second data stream corresponding to the first data stream in a database, where a plurality of second data streams are stored in the database, one or more valid second data streams are included in the plurality of second data streams, and storage information of each of the one or more valid second data streams in the database is included in the query table; and
Step S203: in response to having found in the query table the storage information of the second data stream corresponding to the first data stream in the database, determining, in the database, the second data stream to be spliced with the first data stream based on the storage information.

As such, time consumed for searching for the second data stream to be spliced can be effectively reduced, and the splicing efficiency can be improved and ensured.

According to some embodiments, for the second data stream acquired prior to the first data stream, it may be stored in the database, waiting to be spliced with the corresponding first data stream obtained later.

According to some embodiments, each second data stream in the database has a corresponding storage index, and the storage index of each second data stream may include one or more types of attribute information of the second data stream, e.g., a timestamp of the second data stream and/or identification information of the second data stream. In some embodiments, the plurality of second data streams in the database may be sorted based on an order indicated by respective corresponding storage indexes.

In some embodiments, the storage index that each second data stream in the database has may be constituted by one or more types of storage information corresponding to the second data stream.

According to some embodiments, in the process of obtaining the first data stream, a newly added second data stream may be acquired simultaneously.

According to some embodiments, in response to storing a newly added second data stream in the database, storage information corresponding to the newly added second data stream may be correspondingly stored in the query table. In some embodiments, the query table merely includes storage information of some valid second data streams of the plurality of second data streams stored in the database on which a current splicing operation may be performed, whereas storage information of a second data stream that becomes invalid therein may be deleted through dynamic updating. In some embodiments, storage information of an invalid second data stream in the query table may be deleted based on one or more factors such as time validity of the second data stream, whether a splicing operation has been performed on the second data stream, and an attribute of the second data stream, thereby ensuring that only storage information of a valid second data stream is conserved in the query table.

To ensure the reliability of a system, an acquired second data stream is conserved in the database for a relatively long time, so as to facilitate backtracking a second data stream that needs to be checked as desired. In some embodiments, the second data streams stored in the database include both a valid second data stream that may currently be spliced and a large number of invalid second data streams that currently may not be spliced. To reduce an impact of a large amount of data in the database on searching efficiency, the query table independent of the database may be built. In some embodiments, the query table may be updated in real time based on validity of a second data stream, and only storage information of a currently valid second data stream may be conserved, such that the database is searched only when the storage information of the second data stream corresponding to the first data stream has been found in the query table, which greatly reduces time consumed for the searching.

According to some embodiments, data in the query table may be stored in a form of a data key group.

According to some embodiments, the first data stream may include a first identifier, and the storage information of each of the one or more valid second data streams in the database may include a second identifier of the second data stream. In some embodiments, the querying a query table to find in the query table storage information of a second data stream corresponding to the first data stream in a database may comprise: querying the query table to find a second identifier corresponding to the first identifier; and determining storage information including the second identifier as the storage information of the second data stream corresponding to the first data stream. Thus, the storage information of the second data stream corresponding to the first data stream in the database may be determined conveniently.

In some embodiments, the first identifier of the first data stream may include one or more types of attribute information for representing the first data stream, and the second identifier of the second data stream may include one or more types of attribute information for representing the second data stream. For example, the first identifier and the second identifier may be a user ID corresponding to the data streams, and it may thus be determined that the first data stream and the second data stream that share the same user ID are two data streams to be spliced with.

According to some embodiments, in response to having found in the query table the storage information of the second data stream corresponding to the first data stream in the database, the storage information in the query table may be deleted. Thus, storage information of a matched second data stream may be deleted from the query table in time, such that only storage information of an unmatched second data stream is conserved in the query table, invalid data in the query table is reduced, and the querying efficiency in a process of querying the query table is improved and ensured.

According to some embodiments, storage information of each second data stream in the query table may include a timestamp of the second data stream. In some embodiments, the method may further comprise: for the storage information of each second data stream in the query table, in response to a time difference between a history point indicated by the timestamp in the storage information and a current watermark exceeding a preset delay range, deleting the storage information. Thus, storage information of a second data stream that has already lost time validity may be deleted from the query table in time, such that only storage information of a second data stream that possesses time validity is conserved in the query table, invalid data in the query table is reduced, and the querying efficiency in a process of querying the query table is improved and ensured.

In some embodiments, the watermark is an indicator for measuring progress during real-time computing.

According to some embodiments, a centralized module in the system may be used to record a current watermark corresponding to the query table.

In some embodiments, after the storage information of the second data stream corresponding to the first data stream has been found, step S203 may be performed to determine, in the database, the second data stream to be spliced with the first data stream based on the storage information. In some embodiments, the spliced first and second data stream may be sent downstream for corresponding processing and analyzing.

In some embodiments, original data of the second data stream that has completed the splicing may remain in the database, and thus a second data stream stored in the database is not deleted due to the splicing.

According to some embodiments, the determining, in the database, the second data stream to be spliced with the first data stream based on the storage information may comprise: determining a storage index in the database that is corresponding to the storage information; and determining, in the database, the second data stream corresponding to the storage index based on the determined storage index.

During the data splicing, if a splicing rate of splicing the first data stream with the second data stream is relatively low, a large number of unspliced second data streams may not be sent downstream for further processing, which adversely affects subsequent data processing. In view of this, it is desired to identify the unspliced second data streams in the database and transmit the same downstream for processing.

According to some embodiments, the database further includes a status identifier corresponding to each of the plurality of second data streams. In some embodiments, the above described method further comprises: after the determining the second data stream to be spliced with the first data stream, setting the status identifier corresponding to the second data stream to indicate that the second data stream has completed the splicing. Thus, whether each second data stream is an already spliced data stream or an unspliced data stream may be indicated in the database conveniently.

According to further embodiments, one or more second data streams to be searched in the database may be determined based on a preset search period, wherein a history point indicated by a timestamp of each of the one or more second data streams to be searched is within the preset search period; and for each of the one or more second data streams to be searched, in response to a status identifier corresponding to the second data stream to be searched indicating that the second data stream has not completed the splicing, the second data stream may be determined as a second data stream to be transmitted. Thus, an unspliced second data stream may be efficiently acquired in the database and then transmitted downstream for processing.

According to some embodiments, a time difference between an end time of the preset search period and the current watermark may be greater than a preset waiting time range. In some embodiments, the preset waiting time range may represent the longest time for which the second data stream stored in the database may wait for the first data stream. Consequently, a second data stream that exceeds the preset waiting time range but has not yet been spliced successfully may be determined as a second data stream to be transmitted.

According to some embodiments, a centralized module in the system may be used to record a current watermark corresponding to the database.

According to some embodiments, the plurality of second data streams included in the database are sorted based on a sequential order of history points indicated by respective corresponding timestamps. Thus, the plurality of second data streams in the database may be arranged in chronological order, which facilitates the searching for a second data stream to be transmitted in the database according to timestamp information.

Table 1 below illustrates an exemplary storage mode of the second data streams in the database. For simplicity, only five pieces of second data stream are described by way of example, and the number of pieces of second data stream stored in the database is not limited in the present disclosure.

**Table 1**

| Storage index | Data stream | Status identifier |
|---|---|---|
| Timestamp 001_ second identifier A | Second data stream A | 0 |
| Timestamp 002_ second identifier B | Second data stream B | 1 |
| Timestamp 003_ second identifier C | Second data stream C | 0 |
| Timestamp 003_ second identifier D | Second data stream D | 0 |
| Timestamp 004_ second identifier E | Second data stream E | 1 |

As shown in table 1, the second data streams stored in the database are sorted based on a sequence of timestamps of the second data streams.

The timestamp 001 and the second identifier A of the second data stream A constitute a storage index of the second data stream A in the database. The timestamp 002 and the second identifier B of the second data stream B constitute a storage index of the second data stream B in the database. The timestamp 003 and the second identifier C of the second data stream C constitute a storage index of the second data stream C in the database, the timestamp 003 and the second identifier D of the second data stream D constitute a storage index of the second data stream D in the database. The timestamp 004 and the second identifier E of the second data stream E constitute a storage index of the second data stream E in the database. A status identifier 1 may be used to indicate that a corresponding second data stream has completed the splicing, while a status identifier 0 may be used to indicate that a corresponding second data stream has not completed the splicing.

According to some embodiments, the one or more second data streams to be searched in the database being determined based on the preset search period may comprise: determining a start time and the end time corresponding to the preset search period; searching in the database a start storage index corresponding to the start time and an end storage index corresponding to the end time; and determining a second data stream within a storage range determined by the start storage index and the end storage index in the database as the one or more second data streams to be searched. Thus, in a process of searching the database, all of the second data streams to be searched that correspond to the preset search period can be determined by virtue of determining the start storage index and the end storage index respectively corresponding to the start time and the end time in the database, and thus time consumed for searching for and determining a final second data stream to be transmitted may be effectively reduced.

For illustrative purposes, as shown in table 1, the start storage index corresponding to the start time is "timestamp 002_second identifier B", the end storage index corresponding to the end time is "timestamp 004_second identifier E". Thus, the second data stream B, the second data stream C, the second data stream D, and the second data stream E within a storage range determined by the start storage index "timestamp 002_second identifier B" and the end storage index "timestamp 004_second identifier E" in the database are determined as the one or more second data streams to be searched. The status identifiers of the second data stream C and the second data stream D are 0, indicating that the second data stream C and the second data stream D have not completed the splicing, and the second data stream C and the second data stream D may be treated as second data streams to be transmitted.

According to some embodiments, in response to having not found in the query table the storage information of the second data stream corresponding to the first data stream in the database, the first data stream may be cached. Thus, the following case can be avoided: A splicing success rate of splicing the first data stream with the second data stream is affected when there is a time lag in acquiring the second data stream.

According to some embodiments, the first data stream may be cached in the query table.

According to some embodiments, in response to the first data stream having not yet been spliced successfully after a preset period, the second data stream may be deleted from the query table.

FIG. 3 is a flowchart of a method for data stream processing according to exemplary embodiments of the present disclosure. As shown in FIG. 3, an acquired second data stream may be stored after being processed by a data stream processing module. Specifically, the data stream processing module may extract a timestamp and a second identifier of the second data stream and constructs a storage index of the second data stream in a database based on the timestamp and the second identifier. The second data stream may be stored in the database at a storage location indicated by the storage index. Meanwhile, the timestamp and the second identifier of the second data stream may be stored as storage information of the second data stream in a query table.

In some embodiments, a watermark module may store current watermark information corresponding to the database. In some embodiments, by virtue of the watermark information obtained from the watermark module, an activation module may activate a data search module to determine one or more second data streams to be searched in the database. By way of example, a watermark obtained by the activation module from the watermark module may be 10:00, a preset waiting time range may span 2 hours. Then, a preset search period may be set to 7:50-8:00 if a time window during which searching is allowed spans 10 minutes.

In some embodiments, for each of the one or more second data streams to be searched, in response to a status identifier corresponding to the second data stream to be searched indicating that the second data stream has not completed the splicing, the second data stream may be determined as a second data stream to be transmitted and is transmitted downstream through a transmission module for corresponding processing.

According to another aspect of the present disclosure, there is also disclosed an apparatus for data processing 400. According to some embodiments, the apparatus 400 may comprise an obtaining unit 401 configured to obtain a first data stream; a query unit 402 configured to query a query table to find in the query table storage information of a second data stream corresponding to the first data stream in a database, where a plurality of second data streams are stored in the database, one or more second data streams are included in the plurality of second data streams, and storage information of each of the one or more valid second data streams in the database is included in the query table; and a first determination unit 403 configured to in response to having found in the query table the storage information of the second data stream corresponding to the first data stream in the database, determine, in the database, the second data stream to be spliced with the first data stream based on the storage information.

According to some embodiments, the apparatus 400 may further comprise a cache unit that may be configured to in response to having not found in the query table the storage information of the second data stream corresponding to the first data stream in the database, cache the first data stream.

According to some embodiments, the first data stream may include a first identifier, the storage information of each of the one or more valid second data streams in the database may include a second identifier of the second data stream. Additionally, the query unit may include a module that may be configured to query the query table to find a second identifier corresponding to the first identifier; and a module that may be configured to determine storage information including the second identifier as the storage information of the second data stream corresponding to the first data stream.

According to some embodiments, the apparatus 400 may further comprise a first deletion unit that may be configured to in response to having found in the query table the storage information of the second data stream corresponding to the first data stream in the database, delete the storage information in the query table.

According to some embodiments, storage information of each second data stream in the query table may include a timestamp of the second data stream. Additionally, the apparatus 400 may further comprise a second deletion unit that may be configured to: for the storage information of each second data stream in the query table, in response to a time difference between a history point indicated by the timestamp in the storage information and a current watermark exceeding a preset delay range, delete the storage information.

According to some embodiments, the database may further include a status identifier corresponding to each of the plurality of second data streams. the apparatus 400 may further comprise a setting unit that may be configured to: after the determining the second data stream to be spliced with the first data stream, set the status identifier corresponding to the second data stream to indicate that the second data stream has completed the splicing.

According to some embodiments, the apparatus 400 may further comprise a second determination unit that may be configured to determine, based on a preset search period, one or more second data streams to be searched in the database, wherein a history point indicated by a timestamp of each of the one or more second data streams to be searched is within the preset search period; and a third determination unit that may be configured to: for each of the one or more second data streams to be searched, in response to a status identifier corresponding to the second data stream to be searched indicating that the second data stream has not completed the splicing, determine the second data stream as a second data stream to be transmitted.

According to some embodiments, the plurality of second data streams included in the database may be sorted based on a sequential order of history points indicated by respective corresponding timestamps. Additionally, the second determination unit may include a module that may be configured to determine a start time and an end time corresponding to the preset search period; a module that may be configured to search in the database a start storage index corresponding to the start time and an end storage index corresponding to the end time; and a module that may be configured to determine a second data stream within a storage range determined by the start storage index and the end storage index in the database as the one or more second data streams to be searched.

According to another aspect of the present disclosure, there is further disclosed a computing device. The computing device may comprise one or more processors and a memory communicatively connected to the one or more processors. The memory may store one or more programs configured to be executed by the one or more processors. The one or more programs comprises instructions for performing any one of the foregoing methods.

According to yet another aspect of the present disclosure, there is further disclosed a non-transitory computer-readable storage medium. The non-transitory computer-readable storage medium may store one or more programs comprising instructions that when executed by one or more processors of a computing device, cause the computing device to perform any one of the foregoing methods.

According to yet still another aspect of the present disclosure, there is further disclosed a computer program product. The including computer program product may comprise a computer program that when executed by a processor, causes any one of the foregoing methods to be performed.

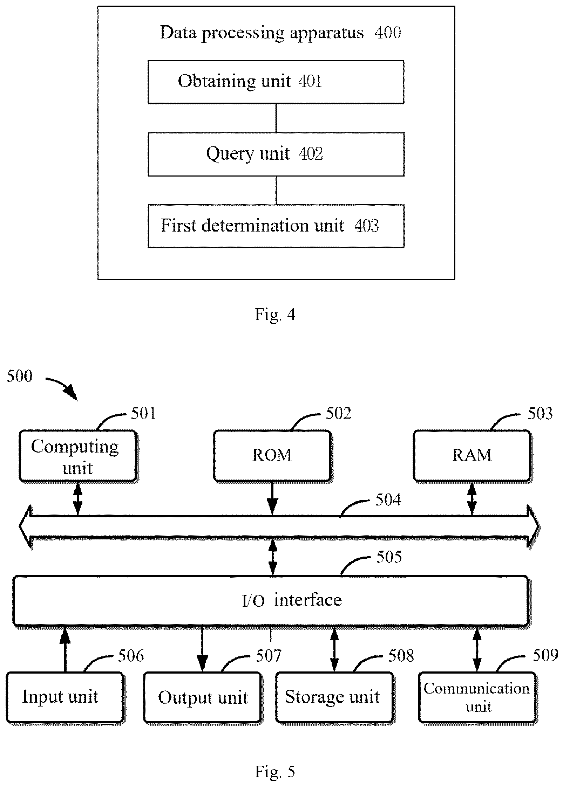

Referring to FIG. 5, a structural block diagram of an electronic device 500 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 5, the device 500 includes a computing unit 501, which may perform various appropriate actions and processing according to a computer program stored in a read-only memory (ROM) 502 or a computer program loaded from a storage unit 508 to a random access memory (RAM) 503. The RAM 503 may further store various programs and data required for the operation of the device 500. The computing unit 501, the ROM 502, and the RAM 503 are connected to each other through a bus 504. An input/output (I/O) interface 505 is also connected to the bus 504.

A plurality of components in the device 500 are connected to the I/O interface 505, including: an input unit 506, an output unit 507, the storage unit 508, and a communication unit 509. The input unit 506 may be any type of device capable of entering information to the device 500. The input unit 506 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 507 may be any type of device capable of presenting information, and may include, but is not limited to, a display, a speaker, a video/audio output terminal, a vibrator, and/or a printer. The storage unit 508 may include, but is not limited to, a magnetic disk and an optical disc. The communication unit 509 allows the device 500 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth^{™} device, a 1302.11 device, a Wi-Fi device, a WiMAX device, a cellular communication device, and/or the like.

The computing unit 501 may be various general-purpose and/or special-purpose processing components with processing and computing capabilities. Some examples of the computing unit 501 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 501 performs the various methods and processing described above, for example, the method for data processing. For example, in some embodiments, the method for data processing may be implemented as a computer software program, which is tangibly contained in a machine-readable medium, such as the storage unit 508. In some embodiments, a part or all of the computer program may be loaded and/or installed onto the device 500 via the ROM 502 and/or the communication unit 509. When the computer program is loaded onto the RAM 503 and executed by the computing unit 501, one or more steps of the method for data processing described above can be performed. Alternatively, in other embodiments, the computing unit 501 may be configured, by any other suitable means (for example, by means of firmware), to perform the method for data processing.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the drawings, it should be appreciated that the methods, systems, and devices described above are merely exemplary embodiments or examples, and the scope of the present invention is not limited by the embodiments or examples, but only defined by the appended authorized claims and equivalent scopes thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A data processing method, comprising:
obtaining a first data stream;
querying a query table to find in the query table storage information of a second data stream corresponding to the first data stream in a database, wherein a plurality of second data streams are stored in the database, one or more valid second data streams are included in the plurality of second data streams, and storage information of each of the one or more valid second data streams in the database is included in the query table; and
in response to having found in the query table the storage information of the second data stream corresponding to the first data stream in the database, determining, in the database, the second data stream to be spliced with the first data stream based on the storage information.

2. The method according to claim 1, further comprising:
in response to having not found in the query table the storage information of the second data stream corresponding to the first data stream in the database, caching the first data stream.

3. The method according to claim 1 or 2, wherein the first data stream includes a first identifier, the storage information of each of the one or more valid second data streams in the database includes a second identifier of the second data stream, and the querying a query table to find in the query table storage information of a second data stream corresponding to the first data stream in a database comprises:
querying the query table to find a second identifier corresponding to the first identifier; and
determining storage information including the second identifier as the storage information of the second data stream corresponding to the first data stream.

4. The method according to claim 3, further comprising:
in response to having found in the query table the storage information of the second data stream corresponding to the first data stream in the database, deleting the storage information in the query table.

5. The method according to any one of claims 1 to 4, wherein storage information of each second data stream in the query table includes a timestamp of the second data stream, and the method further comprises:
for the storage information of each second data stream in the query table, in response to a time difference between a history point indicated by the timestamp in the storage information and a current watermark exceeding a preset delay range, deleting the storage information.

6. The method according to claim 1, wherein the database further comprises a status identifier corresponding to each of the plurality of second data streams, and the method further comprises:
after the determining the second data stream to be spliced with the first data stream, setting the status identifier corresponding to the second data stream to indicate that the second data stream has completed the splicing.

7. The method according to claim 6, further comprising:
determining, based on a preset search period, one or more second data streams to be searched in the database, wherein a history point indicated by a timestamp of each of the one or more second data streams to be searched is within the preset search period; and
for each of the one or more second data streams to be searched, in response to a status identifier corresponding to the second data stream to be searched indicating that the second data stream has not completed the splicing, determining the second data stream as a second data stream to be transmitted.

8. The method according to claim 7, wherein the plurality of second data streams included in the database are sorted based on a sequential order of history points indicated by respective corresponding timestamps.

9. The method according to claim 8, wherein the determining, based on a preset search period, one or more second data streams to be searched in the database comprises:
determining a start time and an end time corresponding to the preset search period;
searching in the database a start storage index corresponding to the start time and an end storage index corresponding to the end time; and
determining a second data stream within a storage range determined by the start storage index and the end storage index in the database as the one or more second data streams to be searched.

10. A data processing apparatus, comprising:
an obtaining unit configured to obtain a first data stream;
a query unit configured to query a query table to find in the query table storage information of a second data stream corresponding to the first data stream in a database, wherein a plurality of second data streams are stored in the database, one or more valid second data streams are included in the plurality of second data streams, and storage information of each of the one or more valid second data streams in the database is included in the query table; and
a first determination unit configured to: in response to having found in the query table the storage information of the second data stream corresponding to the first data stream in the database, determine, in the database, the second data stream to be spliced with the first data stream based on the storage information.

11. The apparatus according to claim 10, further comprising:
a cache unit configured to: in response to having not found in the query table the storage information of the second data stream corresponding to the first data stream in the database, cache the first data stream.

12. The apparatus according to claim 10 or 11, wherein the first data stream includes a first identifier, the storage information of each of the one or more valid second data streams in the database includes a second identifier of the second data stream, and the query unit comprises:
a module configured to query the query table to find a second identifier corresponding to the first identifier; and
a module configured to determine storage information including the second identifier as the storage information of the second data stream corresponding to the first data stream.

13. The apparatus according to claim 12, further comprising:
a first deletion unit configured to: in response to having found in the query table the storage information of the second data stream corresponding to the first data stream in the database, delete the storage information in the query table.

14. The apparatus according to any one of claims 10 to 13, wherein storage information of each second data stream in the query table includes a timestamp of the second data stream, and the apparatus further comprises:
a second deletion unit configured to: for the storage information of each second data stream in the query table, in response to a time difference between a history point indicated by the timestamp in the storage information and a current watermark exceeding a preset delay range, delete the storage information.

15. The apparatus according to claim 10, wherein the database further includes a status identifier corresponding to each of the plurality of second data streams, and the apparatus further comprises:
a setting unit configured to: after the second data stream to be spliced with the first data stream is determined, set the status identifier corresponding to the second data stream to indicate that the second data stream has completed the splicing.

16. The apparatus according to claim 15, further comprising:
a second determination unit configured to determine, based on a preset search period, one or more second data streams to be searched in the database, wherein a history point indicated by a timestamp of each of the one or more second data streams to be searched is within the preset search period; and
a third determination unit configured to: for each of the one or more second data streams to be searched, in response to a status identifier corresponding to the second data stream to be searched indicating that the second data stream has not completed the splicing, determine the second data stream as a second data stream to be transmitted.

17. The apparatus according to any one of claim 16, wherein the plurality of second data streams included in the database are sorted based on a sequential order of history points indicated by respective corresponding timestamps, and the second determination unit comprises:
a module configured to determine a start time and an end time corresponding to the preset search period;
a module configured to search in the database a start storage index corresponding to the start time and an end storage index corresponding to the end time; and
a module configured to determine a second data stream within a storage range determined by the start storage index and the end storage index in the database as the one or more second data streams to be searched.

18. A computing device, comprising:
at least one processor; and
a memory communicatively connected to the at least one processor, wherein
the memory stores instructions executable by the at least one processor, and when executed by the at least one processor, the instructions cause the at least one processor to perform the method according to any one of claims 1 to 9.

19. A non-transitory computer-readable storage medium storing computer instructions, wherein the computer instructions are used to cause a computer to perform the method according to any one of claims 1 to 9.

20. A computer program product, comprising a computer program, wherein when the computer program is executed by a processor, the method according to any one of claims 1 to 9 is implemented.
